# FASCICULE DE BREVET EUROPEEN

(11) **EP 3 074 294 B1**
(45) Date de publication et mention de la délivrance du brevet: **24.10.2018**
(21) Numéro de dépôt: 14806010.6
(22) Date de dépôt: 05.11.2014
(51) Int. Cl.: B62D 1/16

(54) **PLATINE DE COMMUTATEUR ELECTRIQUE ET COLONNE DE DIRECTION D'UN VEHICULE**
PLATTE EINES ELEKTRISCHEN SCHALTERS UND LENKSÄULE EINES FAHRZEUGS
PLATE OF AN ELECTRIC SWITCH AND STEERING COLUMN OF A VEHICLE

(30) Priorité: 21.11.2013 FR 1361477
(43) Date de publication de la demande: 05.10.2016
(73) Titulaire: PSA Automobiles SA, 78300 Poissy (FR)
(72) Inventeur: CHEMIN, Guillaume, F-91190 St Aubin (FR)
(74) Mandataire: Jeannin, Laurent Jean-Pierre
(86) Numéro de dépôt international: PCT/FR2014/052810
(87) Numéro de publication internationale: WO 2015/075344

(56) Documents cités:
- EP-A1- 0 082 997
- EP-A1- 1 319 573
- EP-A2- 1 637 432
- WO-A1-2011/039491

## Description

L'invention concerne la fixation d'une platine de commutateur électrique sur une colonne de direction d'un véhicule, notamment automobile. Plus précisément, selon l'invention, une telle platine comprend une pluralité d'éléments de blocage anti-rotation de la platine par rapport à la colonne de direction.

Dans un véhicule automobile, il est connu d'actionner certaines commandes des équipements du véhicule depuis le tableau de bord, par exemple les feux clignotants ou les balais d'essuie-glace. De telles commandes sont connectées auxdits équipements via un commutateur électrique.

Un tel commutateur se présente généralement sous la forme d'un boitier monté sur la colonne de direction du véhicule. Pour ce faire, le boitier comprend sur sa face arrière une platine comportant un fût fendu axialement dans lequel on insère la colonne de direction et qui est ensuite fixé sur la colonne à l'aide d'un collier de serrage. Par exemple, EP1 319 573 A divulgue un module destiné à être fixé sur une colonne de direction d'un véhicule au moyen d'un organe de fixation formant un tel collier de serrage.

Le serrage d'un tel collier ne permet cependant pas de bloquer complètement la platine en rotation par rapport à la colonne de direction.

Afin de résoudre au moins en partie ce problème, une solution connue consiste à ajouter un élément de blocage anti-rotation sur la platine et à ménager sur la colonne de direction une découpe agencée pour recevoir ledit élément. Un tel élément se présente sous la forme d'une portion de matière de la platine s'étendant en saillie selon une direction parallèle à l'axe du fût.

Une telle solution n'est toutefois pas satisfaisante dans la mesure où il peut exister un jeu angulaire entre l'élément de blocage anti-rotation et la découpe qui peut aboutir à un montage en travers de la platine sur la colonne de direction ou provoquer une sensation inconfortable pour le conducteur du véhicule lorsqu'il tourne le volant ou bien encore créer des perturbations sonores. De plus, dans une telle solution, la liaison entre la platine et la colonne de direction n'est pas suffisamment robuste et rigide et le blocage en rotation n'est toujours pas satisfaisant.

Afin de résoudre au moins en partie ces inconvénients, l'invention a pour but de proposer une platine de commutateur électrique et une colonne de direction comprenant des moyens de blocage en rotation fiables qui rendent la liaison entre la platine et la colonne à la fois stable, rigide et robuste tout en procurant un confort d'utilisation pour le conducteur du véhicule.

A cet effet, l'invention a tout d'abord pour objet une platine destinée à être montée sur une colonne de direction d'un véhicule, ladite platine comprenant une plaque de laquelle s'étend orthogonalement un fût fendu axialement apte à être serré autour de ladite colonne de direction, ladite platine étant remarquable en ce qu'elle comprend une pluralité d'éléments de blocage anti-rotation, de préférence deux éléments, agencés chacun pour coopérer par encastrement avec une découpe de la colonne de direction.

L'utilisation d'une pluralité d'éléments de blocage anti-rotation permet de rigidifier la liaison entre la platine et la colonne de direction qui est donc plus robuste.

De préférence, les éléments de blocage anti-rotation s'étendent en saillie à l'intérieur du fût parallèlement à son axe.

De préférence encore, lorsque la platine comprend deux éléments de blocage anti-rotation, les deux éléments de blocage anti-rotation sont diamétralement opposés par rapport à l'axe du fût. La disposition symétrique des éléments de blocage anti-rotation permet notamment de rendre la liaison entre la platine et la colonne de direction stable et confortable pour l'opérateur du volant du véhicule.

De manière avantageuse, les éléments de blocage anti-rotation comprennent au moins une portion réalisée en un matériau déformable, de préférence un matériau plastique, et agencée pour être déformée lors de l'encastrement de l'élément de blocage anti-rotation dans la découpe correspondante de la colonne de direction. L'utilisation d'une portion déformable permet de rendre la liaison entre la platine et la colonne de direction est ainsi à la fois solide et fiable tout en bloquant solidement en rotation la platine par rapport à la colonne de direction.

Avantageusement encore, ladite portion comprend au moins une nervure s'étendant parallèlement à l'axe du fût. Une telle nervure est aisée à réaliser et à compresser par matage.

De manière préférée, la nervure s'étend sur la longueur de l'élément de blocage anti-rotation de sorte à permettre un encastrement intégral solide de l'élément de blocage anti-rotation dans la découpe correspondante de la colonne de direction.

Selon une caractéristique de l'invention, les éléments de blocage anti-rotation sont issus de matière de la platine, la platine étant alors aisée à fabriquer.

L'invention concerne aussi une colonne de direction comprenant une pluralité de découpes, de préférence deux découpes, agencées chacune pour recevoir par encastrement un élément de blocage anti-rotation d'une platine tel que présentée précédemment.

De préférence, chacune des découpes est en forme de U dont les extrémités sont biseautées afin de faciliter l'insertion et permettre le matage de l'élément de blocage anti-rotation correspondant de la platine.

L'invention concerne également un ensemble formé d'une platine et d'une colonne de direction telles que présentées précédemment, les éléments de blocage anti-rotation de la platine étant encastrés dans les découpes correspondantes de la colonne de direction.

L'invention concerne de même un véhicule comprenant un ensemble tel que présenté précédemment.

L'invention concerne enfin un procédé de montage d'un ensemble tel que présenté précédemment, ledit procédé étant remarquable en ce qu'il comprend une étape d'insertion en force par encastrement des éléments de blocage anti-rotation de la platine dans les découpes correspondantes de la colonne de direction.

Par les termes « en force », on entend que, la largeur des éléments de blocage anti-rotation étant supérieure ou égale à la largeur des découpes, il est nécessaire d'exercer une force d'encastrement des éléments de blocage anti-rotation dans leurs découpes respectives.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une forme de réalisation d'une platine selon l'invention ;
- figure 2, une vue de face du fût de la platine de la figure 1 ;
- figure 3, une vue partielle rapprochée d'un élément de blocage anti-rotation de la platine de la figure 1 ;
- figure 4, une vue partielle rapprochée d'une nervure de l'élément de blocage anti-rotation de la figure 3 ;
- figure 5, une forme de réalisation d'une colonne de direction selon l'invention ;
- figure 6, une vue rapprochée de la liaison par encastrement entre un élément de blocage anti-rotation d'une platine et une colonne de direction selon l'invention.

Dans ce qui va suivre, la forme de réalisation décrite s'attache plus particulièrement à une mise en oeuvre de la platine selon l'invention à une colonne de direction d'un véhicule, notamment dans le domaine automobile. Cependant, toute mise en oeuvre dans un contexte différent, en vue d'assurer une fonction de blocage en rotation d'une platine sur un support tel qu'un bras, est également visée par la présente invention.

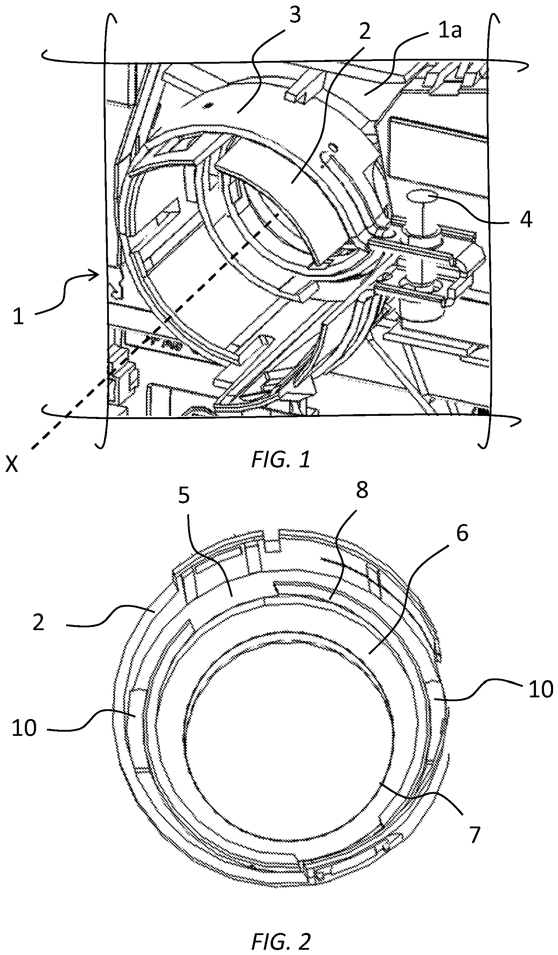

La figure 1 illustre une forme de réalisation, non limitative, d'une platine 1 selon l'invention. La platine 1 n'est représentée que schématiquement sur cette figure annexée. Il s'agit de préférence d'une platine d'un commutateur électrique (non représenté).

La platine 1 peut être réalisée en tout matériau connu approprié. De préférence, la platine 1 est réalisée par moulage en matière plastique.

La platine 1 peut supporter des organes actifs du commutateur électrique, notamment des lames électriquement conductrices.

Dans la forme de réalisation illustrée par la figure 1, la platine 1 est formée d'une plaque 1a mais peut bien entendu faire l'objet de toute variante adaptée aux contraintes du commutateur électrique.

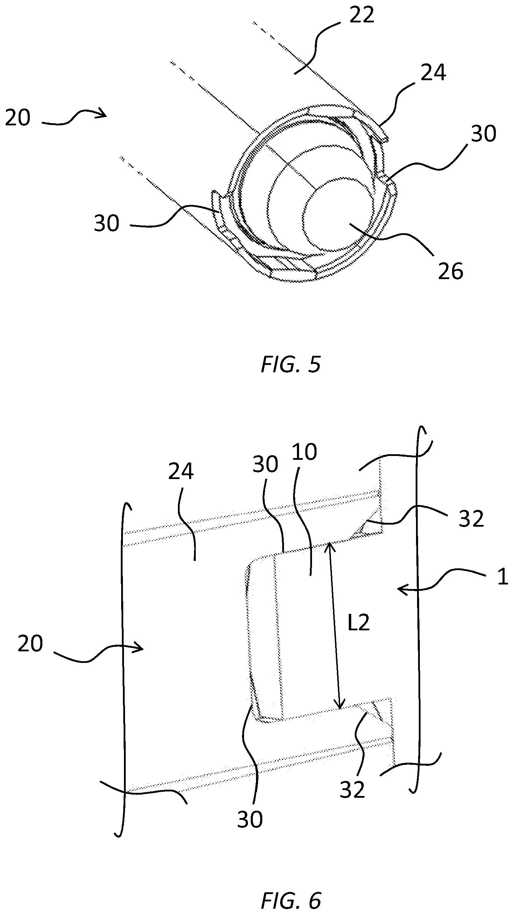

La platine 1 comprend un fût 2 s'étendant orthogonalement à la plaque 1a selon un axe X qui permet de fixer la platine 1 sur une colonne de direction 20 (en référence à la figure 5).

A cette fin, le fût 2 est fendu axialement orthogonale à la plaque 1a. Le diamètre interne du fût fendu 2 au repos est adapté pour être engagé autour de la colonne de direction 20 du véhicule (non représenté) puis serré sur ladite colonne 20 à l'aide d'un collier de serrage 3 et d'un système de vis et d'écrou 4. Bien entendu, tous autres moyens de serrage pourraient être utilisés.

Dans l'exemple illustré à la figure 2, la platine 1 comprend, à l'intérieur du fût 2, un premier élément annulaire 5 d'axe X et un deuxième élément annulaire 6 d'axe X.

Le deuxième élément annulaire 6 de diamètre inférieur au premier élément annulaire 5 défini une ouverture 7 agencée pour recevoir une portion (non représentée) de la colonne de direction 20.

Le premier élément annulaire 5 s'étend de la plaque 1a et comprend deux portions de support 8 s'étendant en saillie à l'intérieur du fût 2 parallèlement à l'axe X.

Selon l'invention, la platine 1 comprend dans cet exemple deux éléments de blocage anti-rotation 10 diamétralement opposées disposées à l'intérieur du fût 2.

Chacun des deux éléments de blocage anti-rotation 10 se présente sous la forme d'une portion issue de matière de la platine 1 qui s'étend en saillie parallèlement à l'axe X du fût 2 entre l'une des portions de support 8 et le fût 2 depuis l'élément annulaire 5.

Selon l'invention, les éléments de blocage anti-rotation 10 sont agencés chacun pour coopérer par encastrement avec une découpe 30 de la colonne de direction 20 (en référence aux figures 5 et 6) comme expliqué ci-après.

Ainsi, en tenant compte des éventuelles contraintes de structure et d'agencement, pour la fixation de la platine 1 sur la colonne de direction 20, une pluralité d'éléments de blocage anti-rotation 10 est prévue sur la platine 1 afin de la bloquer en rotation par rapport à la colonne 20.

Dans l'exemple illustré, la section transversale des éléments de blocage anti-rotation 10 est sensiblement en arc de cercle d'une courbure dont la valeur est de l'ordre de celle de la découpe 30 de la colonne de direction 20 afin de permettre un encastrement solide.

Cela est notamment possible lorsque les éléments de blocage anti-rotation 10 sont réalisés lors du moulage de la platine 1 de manière connue de l'homme du métier. Toutefois, il va de soi qu'en variante, les éléments de blocage anti-rotation 10 peuvent être rapportés sur la platine 1.

De préférence, chaque élément de blocage anti-rotation 10 comprend une portion réalisée en un matériau plastique déformable, par exemple de type PA6GF30 connu de l'homme du métier, de sorte à être déformé par matage lors de son encastrement dans la découpe 30 correspondante de la colonne de direction 20.

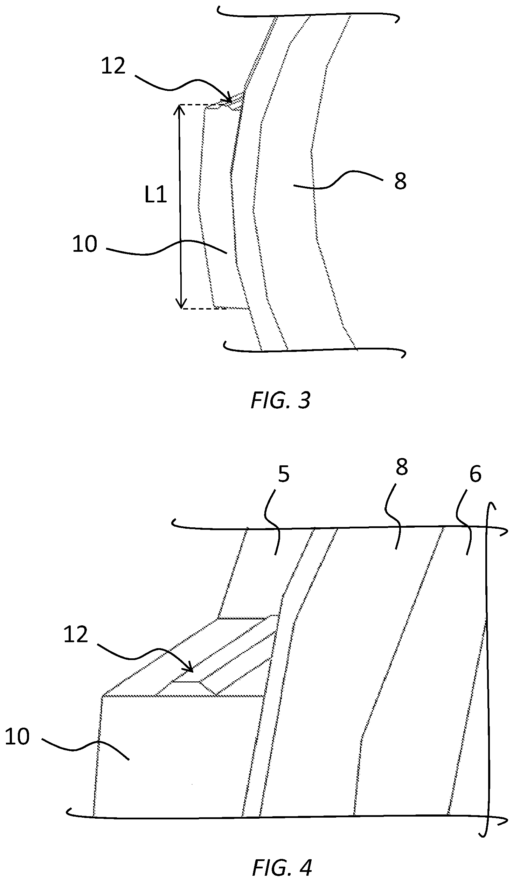

Dans l'exemple illustré aux figures 3 et 4, ladite portion comprend une nervure 12 configurée pour se déformer par matage lors de l'encastrement en force de l'élément de blocage anti-rotation 10 dans la découpe 30 correspondante de la colonne de direction 20.

La largeur L1 de l'élément de blocage anti-rotation 10 au repos (i.e. avant encastrement) avec la nervure 12 est ainsi supérieure ou égale à la largeur L2 de la découpe 30 correspondante de la colonne de direction 20. Par exemple, la largeur L2 de la découpe 30 peut être de l'ordre de 12 mm et la largeur L1 de l'élément de blocage anti-rotation 10 au repos peut être de 12,225 mm, la nervure 12 ayant une épaisseur, par exemple, de 0,225 mm.

L'utilisation d'une telle nervure 12 déformable facilite l'encastrement de l'élément de blocage anti-rotation 10 en force tout en assurant un maintien par encastrement solide dans la découpe 30. Il va de soi qu'un élément de blocage anti-rotation 10 peut comprendre plus d'une portion réalisée en un matériau déformable pour permettre son encastrement dans la découpe 30 correspondante. Par exemple, dans le cas d'une pluralité de nervures 12, ces nervures 12 peuvent être d'une épaisseur différente, par exemple plus petite que 12,225 mm de sorte à éviter d'avoir à exercer un effort d'encastrement trop important.

Comme illustré par la figure 5, la colonne de direction 20 selon l'invention comprend deux découpes 30 agencées chacune pour recevoir par encastrement un élément de blocage anti-rotation 10 de la platine 1.

En référence à la figure 6, chacune des découpes 30 est en forme de U dont les extrémités 32 sont biseautées afin de faciliter l'insertion et permettre le matage de l'élément de blocage anti-rotation 10 correspondant de la platine 1.

Ainsi, lors du montage de la platine 1 sur la colonne de direction 20, on positionne tout d'abord les éléments de blocage anti-rotation 10 face aux découpes 30 correspondantes de la colonne de direction 20.

On insère ensuite en force par encastrement chacun des éléments de blocage anti-rotation 10 de la platine 1 dans la découpe 30 correspondante de la colonne de direction 20, les extrémités en biseau 32 des découpes facilitant l'insertion et l'encastrement et les nervures 12 se déformant lors de l'encastrement afin de maintenir solidement les éléments de blocage anti-rotation 10 encastrés dans les découpes 30.

Une fois les éléments de blocage anti-rotation 10 encastrés dans les découpes 30, on serre le fût 2 autour de la colonne de direction 20 à l'aide des moyens de serrage 3 et 4.

Il peut bien entendu être prévu, sans sortir du cadre de la présente invention, des éléments de blocage anti-rotation 10 et des découpes 30 de formes différentes tenant compte de la structure de la platine 1 et/ou de la structure de la colonne de direction 20.

Il est à noter, en outre, que la présente invention n'est pas limitée aux exemples décrits ci-dessus et est susceptible de nombreuses variantes accessibles à l'homme de l'art. Notamment, la forme et les dimensions de la platine 1, du fût 3, des éléments de blocage anti-rotation 10, de la colonne de direction 20 et des découpes 30 tels que représentés sur les figures de façon à illustrer un exemple de réalisation de l'invention, ne sauraient être interprétés comme limitatifs.

## Revendications

1. Platine destinée à être montée sur une colonne de direction (20) d'un véhicule, ladite platine (1) comprenant une plaque (1a) de laquelle s'étend orthogonalement un fût (2) fendu axialement apte à être monté sur ladite colonne de direction (20), ladite platine (1) comprenant une pluralité d'éléments de blocage anti-rotation (10) agencés chacun pour coopérer par encastrement avec une découpe (30) de la colonne de direction (20), **caractérisée en ce que**, la platine (1) comprenant deux éléments de blocage anti-rotation (10), les deux éléments de blocage anti-rotation (10) sont diamétralement opposées par rapport à l'axe (X) du fût (2).

2. Platine selon la revendication précédente, **caractérisée en ce que** les éléments de blocage anti-rotation (10) s'étendent en saillie à l'intérieur du fût (2) parallèlement à son axe (X).

3. Platine selon l'une des revendications précédentes, **caractérisée en ce que** les éléments de blocage anti-rotation (10) comprennent au moins une portion réalisée en un matériau déformable et agencée pour être déformée lors de l'encastrement de l'élément de blocage anti-rotation (10) dans la découpe (30) correspondante de la colonne de direction (20).

4. Platine selon la revendication précédente, **caractérisée en ce que** ladite portion comprend une nervure (12) s'étendant parallèlement à l'axe (X) du fût (2).

5. Platine selon l'une des revendications précédentes, **caractérisée en ce que** les éléments de blocage anti-rotation (10) sont issus de matière de la platine (1).

6. Colonne de direction **caractérisée en ce qu'**elle comprend une pluralité de découpes (30) agencées chacune pour recevoir par encastrement un élément de blocage anti-rotation (10) d'une platine (1) selon l'une des revendications précédentes.

7. Colonne de direction selon la revendication précédente, **caractérisée en ce que** chacune des découpes (30) est en forme de U dont les extrémités (32) sont biseautées afin de faciliter l'insertion et permettre le matage de l'élément de blocage anti-rotation (10) correspondant de la platine (1).

8. Ensemble formé d'une platine (1) selon l'une des revendications 1 à 5 et d'une colonne de direction selon l'une des revendications 6 et 7, **caractérisé en ce que** les éléments de blocage anti-rotation (10) de la platine (1) sont encastrés dans les découpes (30) correspondantes de la colonne de direction (20).

9. Procédé de montage d'un ensemble selon la revendication 8, ledit procédé étant **caractérisé en ce qu'**il comprend une étape d'insertion en force par encastrement des éléments de blocage anti-rotation (10) de la platine (1) dans les découpes (30) correspondantes de la colonne de direction (20).

## Patentansprüche

1. Platte, die dazu bestimmt ist, auf eine Lenksäule (20) eines Fahrzeugs montiert zu sein, wobei die Platte (1) eine Tafel (1a) umfasst, von der sich orthogonal ein Schaft (2), der axial gespaltet ist, erstreckt, der auf die Lenksäule (20) montiert werden kann, wobei die Platte (1) eine Mehrzahl von Drehschutzblockierungselementen (10) umfasst, die jeweils eingerichtet sind, um durch Einlassen mit einem Ausschnitt (30) der Lenksäule (20) zusammenzuwirken, **dadurch gekennzeichnet, dass** die Platte (1) zwei Drehschutzblockierungselemente (10) umfasst, wobei die zwei Drehschutzblockierungselemente (10) in Bezug auf die Achse (X) des Schafts (2) einander diametral gegenüber liegen.

2. Platte nach dem vorhergehenden Anspruch, **dadurch gekennzeichnet, dass** sich die Drehschutzblockierungselemente (10) in dem Inneren des Schafts (2) parallel zu seiner Achse (X) vorragend erstrecken.

3. Platte nach einem der vorhergehenden Ansprüche, **dadurch gekennzeichnet, dass** die Drehschutzblockierungselemente (10) mindestens einen Abschnitt umfassen, der aus einem verformbaren Material hergestellt und eingerichtet ist, um bei dem Einlassen des Drehschutzblockierungselements (10) in dem entsprechenden Ausschnitt (30) der Lenksäule (20) verformt zu werden.

4. Platte nach dem vorhergehenden Anspruch, **dadurch gekennzeichnet, dass** der Abschnitt eine Rippe (12) umfasst, die sich parallel zu der Achse (X) des Schafts (2) erstreckt.

5. Platte nach einem der vorhergehenden Ansprüche, **dadurch gekennzeichnet, dass** die Drehschutzblockierungselemente (10) aus einem Stück mit der Platte (1) bestehen.

6. Lenksäule, **dadurch gekennzeichnet, dass** sie eine Vielzahl von Ausschnitten (30) umfasst, die jeweils eingerichtet sind, um durch Einlassen ein Drehschutzblockierungselement (10) einer Platte (1) nach einem der vorhergehenden Ansprüche aufzunehmen.

7. Lenksäule nach dem vorhergehenden Anspruch, **dadurch gekennzeichnet, dass** jeder der Ausschnitte (30) die Form eines U hat, dessen Enden (32) abgeschrägt sind, um das Einsetzen zu erleichtern und das Verstemmen des entsprechenden Drehschutzblockierungselements (10) der Platte (1) zu erlauben.

8. Baugruppe, die aus einer Platte (1) nach einem der Ansprüche 1 bis 5 und einer Lenksäule nach einem der Ansprüche 6 und 7 gebildet ist, **dadurch gekennzeichnet, dass** die Drehschutzblockierungselemente (10) der Platte (1) in die entsprechenden Ausschnitte (30) der Lenksäule (20) eingelassen sind.

9. Verfahren zur Montage einer Baugruppe nach Anspruch 8, Verfahren **dadurch gekennzeichnet, dass** es einen Schritt des Einsetzens unter Kraftanwendung durch Einlassen der Drehschutzblockierungselemente (10) der Platte (1) in die entsprechenden Ausschnitte (30) der Lenksäule (20) umfasst.

## Claims

1. A plate intended to be mounted on a steering column (20) of a vehicle, said plate (1) including a sheet (1a) from which an axially split drum (2) capable of being mounted on said steering column (20) extends orthogonally, said plate (1) including a plurality of anti-rotation locking elements (10) each arranged so as to cooperate by fitting with a cut-out (30) of the steering column (20), **characterized in that**, the plate (1) including two anti-rotation locking elements (10), the two anti-rotation locking elements (10) are diametrically opposed with respect to the axis (X) of the drum (2).

2. The plate according to the preceding claim, **characterized in that** the anti-rotation locking elements (10) extend projecting in the interior of the drum (2) parallel to its axis (X).

3. The plate according to one of the preceding claims, **characterized in that** the anti-rotation locking elements (10) include at least one portion made from a deformable material and arranged so as to be deformed during the fitting of the anti-rotation locking element (10) in the corresponding cut-out (30) of the steering column (20).

4. The plate according to the preceding claim, **characterized in that** said portion includes a rib (12) extending parallel to the axis (X) of the barrel (2).

5. The plate according to one of the preceding claims, **characterized in that** the anti-rotation locking elements (10) are made from the material of the plate (1) .

6. A steering column, **characterized in that** it includes a plurality of cut-outs (30) each arranged so as to receive, by fitting, an anti-rotation locking element (10) of a plate (1) according to one of the preceding claims.

7. The steering column according to the preceding claim, **characterized in that** each of the cut-outs (30) is U-shaped, the ends (32) of which are bevelled, so as to facilitate the insertion and to permit the caulking of the corresponding anti-rotation locking element (10) of the plate (1).

8. An assembly formed by a plate (1) according to one of Claims 1 to 5 and by a steering column according to one of Claims 6 and 7, **characterized in that** the anti-rotation locking elements (10) of the plate (1) are fitted in the corresponding cut-outs (30) of the steering column (20).

9. A method for mounting an assembly according to Claim 8, said method being **characterized in that** it includes a step of press-in insertion by fitting of the anti-rotation locking elements (10) of the plate (1) in the corresponding cut-outs (30) of the steering column (20) .
